# EUROPÄISCHE PATENTSCHRIFT

(11) **EP 2 718 577 B1**
(45) Veröffentlichungstag und Bekanntmachung des Hinweises auf die Patenterteilung: **26.08.2015**
(21) Anmeldenummer: 12724607.2
(22) Anmeldetag: 25.05.2012
(51) Int. Cl.: F16C 33/04, F16C 23/04, F16C 9/04, F16C 17/02, F16C 33/14

(54) **GLEITLAGERSCHALE MIT IN AXIALER RICHTUNG PROFILIERTER OBERFLÄCHENGEOMETRIE DER GLEITFLÄCHE**
PLAIN BEARING SHELL WITH SLIDE FACE SURFACE GEOMETRY WHICH IS PROFILED IN THE AXIAL DIRECTION
COUSSINET DE PALIER LISSE À GÉOMÉTRIE SUPERFICIELLE DE LA SURFACE DE GLISSEMENT PROFILÉE DANS LA DIRECTION AXIALE

(30) Priorität: 09.06.2011 DE 102011077278
(43) Veröffentlichungstag der Anmeldung: 16.04.2014
(73) Patentinhaber: Federal-Mogul Wiesbaden GmbH, 65201 Wiesbaden (DE)
(72) Erfinder: ROßMANITH, Ralf, 65375 Oestrich-Winkel (DE); RITTMANN, Stefan, 67292 Kirchheimbolanden (DE)
(74) Vertreter: Hoffmann Eitle
(86) Internationale Anmeldenummer: PCT/EP2012/059853
(87) Internationale Veröffentlichungsnummer: WO 2012/168096

(56) Entgegenhaltungen:
- DE-A1- 10 208 118
- JP-A- 2008 144 932
- US-A- 6 120 187

## Beschreibung

### Technisches Gebiet

Die Erfindung betrifft eine Gleitlagerschale mit teilweise konvex gekrümmter Gleitfläche. Die Erfindung betrifft ferner ein Verfahren zur Herstellung einer solchen Gleitlagerschale.

### Stand der Technik

Die Gleitflächenbearbeitung von Lagerschalen erfolgt durch Ausbohren der Lagerschalen. Hierbei dreht sich eine Bohrspindel mit einer Drehzahl X [U/min] und bewegt sich mit einem Vorschub Y [mm/U] in axialer Richtung der zu bearbeitenden Lagerschale. Das Ausbohren erfolgt beispielsweise mit einer Bohrspindel, in deren Spindelkopf zwei um 180° gegenüberliegende Schneidpatronen eingesetzt sind.

Die Bohrspindel weist eine erste Schneidpatrone zum Schneiden einer Lagerschale auf eine gewisse Wanddicke (kontinuierlich oder diskontinuierlich) und ggf. eine zweite Schneidpatrone zum Ausbilden von sog. Freilegungsbereichen auf. Unter einem Freilegungsbereich versteht man einen Bereich an den Lagerschalenenden bzw. im Bereich der Teilflächen, in dem die Wandstärke der Lagerschale im Vergleich zur Wandstärke der restlichen Lagerschale reduziert ist. Auf diese Weise kann der Verschleiß einer in der Lagerschale laufenden Welle aufgrund von Ungenauigkeiten an den Verbindungsstellen der beiden, ein Lager bildenden Lagerschalen verringert werden. Die beiden um 180° gegenüberliegenden Schneidpatronen sind axial versetzt auf dem Spindelkopf angeordnet. Eine Einstellung des Durchmessers des Schneidekreises ist bei stillstehender Bohrspindel möglich.

Während des Bearbeitungsprozesses sind die beiden Schneidpatronen bezüglich ihrer axialen Richtung, d. h. in radialer Richtung der Bohrspindel, fest stehend.

Durch die exakt geradlinig ausgeführte Vorschubbewegung der Bohrspindel entsteht eine ebenso exakt geradlinig bearbeitete Oberflächengeometrie der Gleitfläche an der Gleitlagerschale.

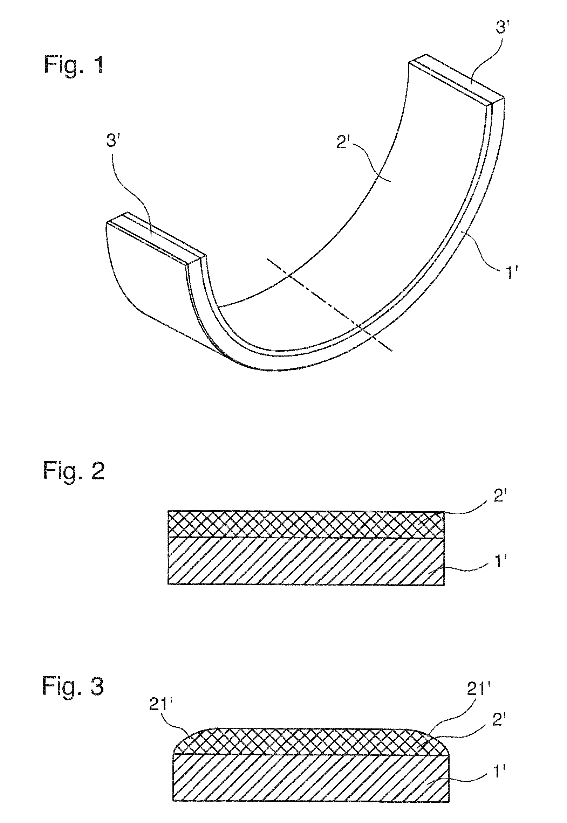

Eine solche Lagerschale 1 ist in Figur 1 gezeigt. Die profilfreie Gleitfläche ist mit 2' bezeichnet und die beiden Teilflächen an den Randbereichen der Lagerschale 1' sind mit 3' bezeichnet. Ein Querschnitt durch die herkömmliche, profilfreie Lagerschale (entlang der in Figur 1 dargestellten Strichpunktlinie) ist in Figur 2 gezeigt. Die Gleitfläche 2' ist entlang der axialen Richtung der Lagerschale eben.

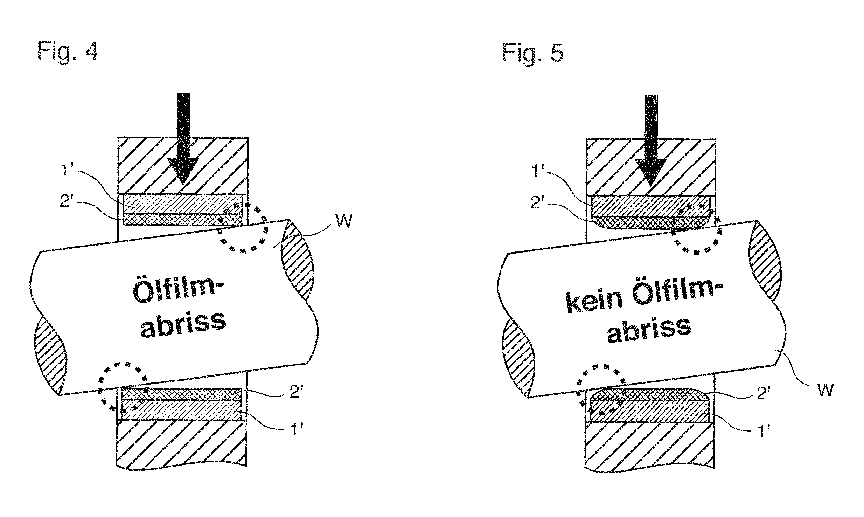

Speziell in Verbrennungsmotoren treten sehr hohe Belastungen, bis zum Kontakt zwischen den äußeren Bereichen der Gleitlagerschale, in axialer Richtung der Gleitlagerschale gesehen, und der Welle auf. Große Öldrücke zwischen den äußeren Bereichen der Gleitlagerschale, in axialer Richtung der Gleitlagerschale, und der Welle führen im Betrieb zu starkem Ölverlust in der Gleitlagerungsstelle. Der Abriss des Ölfilms zwischen Gleitlagerschale und Welle hat einen außerordentlich hohen Verschleiß und Materialermüdung im Bereich der Kontaktzone zwischen Gleitlagerschale und Welle zur Folge. Eine Ursache für Verschleiß der Gleitfläche am Lager und der darin gelagerten Welle liegt in einer minimalen Durchbiegung oder Verkippung der Welle unter Belastung, wie es in Figur 4 schematisch und mit stark überzeichneter Verkippung der Welle W gezeigt ist. Handelt es sich bei dem Lager um ein Pleuellager oder ein stark beanspruchtes HauptLager in Verbrennungsmotoren, wirken sich diese ungleichmäßigen Belastungen der Welle auf das Lager letztendlich nachteilig auf das Laufverhalten des Motors aus. Insbesondere können speziell in den am höchsten belasteten Bereichen der Gleitlagerschale, dem Scheitel der Gleitlagerschale, gravierende, den Betriebszustand eines Motors stark beeinflussende Mängel resultieren. Die daraus hervorgerufenen Mängel können zu Störungen im Betriebszustand des Motors bis hin zum kompletten Ausfall des Motors führen.

Gemäß der DE 102 08 118 A1 wird dieses Problem herkömmlich dadurch gelöst, dass die beiden Endabschnitte des Gleitlagers (in axialer Richtung des Lagers gesehen) ballig ausgebildet sind, so wie es in den Figuren 3 und 5 gezeigt ist. Durch die Krümmung an den Randbereichen 21' wird verhindert, dass die Endabschnitte des Gleitlagers anschlagen, wenn der Kurbelbolzen oder die Welle sich unter Belastung biegt.

Gemäß der DE 102 08 118 A1. ist neben dem Problem der Durchbiegung der Welle unter Belastung auch das Problem der Verformung des Lagers unter Belastung zu berücksichtigen. Im mittleren Abschnitt des Gleitlagers, in axialer Richtung gesehen, wirkt ein größerer Öldruck als in den Randbereichen. Der ortsabhängige Öldruck bewirkt, dass die Gleitfläche des Lagers konkav verformt wird, so dass es selbst bei balliger Ausführung der Gleitfläche an den Randbereichen zu einem Abriss des Ölfilms kommen kann. Eine stärkere Ausprägung der Balligkeit, allerdings, steht im Widerspruch zu einer Maximierung des lastaufnehmenden Bereichs.

Die DE 102 08 118 A1 schlägt zur Lösung dieses Problems, das von der Verkippung oder Verbiegung der Welle zu unterscheiden ist, ein Gleitlager vor, das eine zylindrische Lagerfläche und einen geneigten Endabschnitt auf jeder axialen Endseite der Lagerfläche aufweist. Die geneigte Fläche erstreckt sich von einem bestimmten axialen Ort der Lagerfläche zum Rand, in axialer Richtung des Lagers gesehen, wobei die axiale Länge der geneigten Fläche entlang des Umfangs der zylindrischen Lagerfläche variiert. Die axiale Länge der geneigten Fläche in Umfangsrichtung des Lagers ist an die auftretenden Verformungen unter Belastung der Gleitschicht angepasst. In einer Ausführungsform ist die axiale Länge der geneigten Fläche so gewählt, dass sie im Scheitel der Lagerschale am längsten ist und zu den Umfangsenden der Lagerschale hin kürzer wird. Mit Wahl des Grads der Abschrägung und der axialen Länge der Abschrägung an den Endbereichen wird eine Kompensation der Verformung der Lagerschale aufgrund des Öldrucks angestrebt.

Davon zu unterscheiden ist das oben angesprochene Problem der Verbiegung oder Verkippung der Welle im Lager, dem herkömmlich durch Abrunden der Lagerschalenenden über den gesamten Umfang des Lagers Rechnung getragen wird. Eine geringe Abrundung der Lagerschalenden löst das Problem des Ölabrisses aufgrund Verbiegung oder Verkippung der Welle nur unzureichend. Auf der anderen Seite verringert eine stark ballige Ausbildung der Gleitfläche die Führungsgenauigkeit der Welle im Lager.

### Zusammenfassung der Erfindung

Eine Aufgabe der Erfindung besteht darin, eine Lagerschale bereitzustellen, bei der die Wahrscheinlichkeit eines Ölfilmabrisses im Randbereich der Lagerschale (in axialer Richtung gesehen) aufgrund Verbiegung oder Verkippung einer darin gelagerten Welle verringert wird, bei gleichzeitiger Aufrechterhaltung der Führungsgenauigkeit der Welle im Lager. Eine weitere Aufgabe der Erfindung besteht darin, ein Verfahren zur Herstellung eines solchen Lagers bereitzustellen, mit dem sich zusätzlich die Profilgebung der Gleitfläche mit verringertem Arbeitsaufwand verwirklichen lässt.

Die Aufgaben werden mit einer Gleitlagerschale gemäß Anspruch 1 und einem Verfahren zur Herstellung einer solchen Gleitlagerschale gemäß Anspruch 10 gelöst.

Die erfindungsgemäße Gleitlagerschale weist eine Gleitfläche auf, die im Bereich des Scheitels (in Umfangsrichtung der Lagerschale gesehen) und hierbei zumindest an den Randbereichen in axialer Richtung konvex gekrümmt ist. Die Krümmung ist im Scheitel am stärksten ausgeführt und nimmt in Umfangsrichtung der Gleitlagerschale zu den beiden Teilflächen hin kontinuierlich ab. Aufgrund der im Betrieb auftretenden Verbiegungen oder Verkippungen der Welle ist es ausreichend, die abfallende Geometrie im Scheitel der Gleitlagerschale am stärksten auszuführen. Somit verbleiben Bereiche der Gleitfläche, abseits des Scheitelbereichs, in denen die Gleitfläche nur schwach oder gar nicht gekrümmt ist. Somit wird die Führung der Welle gegenüber einer in Umfangsrichtung durchgängig gekrümmten Gleitfläche verbessert. Die konvexe Krümmung verringert die Wahrscheinlichkeit eines Ölabrisses in den Randbereichen des Lagers. Durch die Krümmung werden im Gegensatz zu einer auf die Verformung des Lagers gerichtete Abschrägung der Endbereiche verschiedene Kippwinkel und/oder Durchbiegungsgrade der Welle berücksichtigt. Auf diese Weise wird auch einer Vergrößerung des Spiels zwischen Welle und Gleitfläche aufgrund von Abnutzung Rechnung getragen, die einen direkten Einfluss auf die auftretenden Kippwinkel und Durchbiegungsamplituden hat.

Die Krümmung läuft in Umfangsrichtung vorzugsweise kontinuierlich bis auf Null aus, so dass an den beiden Teilflächen keine konvexe Profilierung vorgesehen ist. Dadurch wird die Führungsgenauigkeit des Lagers weiter verbessert. Zudem lassen sich auf diese Weise besonders einfach Freilegungsbereiche integrieren, die eine Reduzierung der Wanddicke der Lagerschale in den Bereichen der Teilflächen bezeichnen. Durch die Freilegungsbereiche wird vermieden, dass Ungenauigkeiten an den Verbindungsstellen der beiden Lagerschalen dazu führen, dass die Innenkante einer Teilfläche an einer Verbindungsstelle nach innen hervorsteht, insbesondere im Hinblick darauf, dass die Lagerschalen mit hohem Druck aufeinander gepresst werden, um gemeinsam ein Lager zu bilden. Dadurch werden die Laufeigenschaften der Welle verbessert und eine Verschleißreduzierung des Lagers der Welle bewirkt. Zur Herstellung der Freilegungsbereiche weist die Bohrspindel neben der ersten Schneidpatrone zum Schneiden der Lagerschale auf eine gewisse Wanddicke (kontinuierlich oder diskontinuierlich) eine zweite Schneidpatrone auf. Die erste Schneidpatrone ist vorzugsweise in der Vorschubrichtung des Werkzeugs versetzt hinter der zweiten Schneidpatrone angeordnet. Vorzugsweise sind die beiden Schneidpatronen um 180° gegenüberliegend an der Bohrspindel angebracht. Durch eine geeignete Positionierung der zweiten Schneidpatrone und eine Schrägstellung des Bohrwerkzeugs bezüglich der Lagerschalenachse während der Bearbeitung lassen sich Freilegungsbereiche an den Lagerschalenenden ausbilden.

Vorzugsweise ist die Gleitfläche der Lagerschale an den Randbereichen in axialer Richtung gekrümmt und dazwischen eben, wobei der Übergang zwischen dem gekrümmten und dem ebenen Bereich kontinuierlich ist. Auf diese Weise wird die Führungsgenauigkeit der Lagerschale erhöht. Die Vermeidung eines diskontinuierlichen Übergangs zwischen dem ebenen Bereich und dem gekrümmten Bereich verringert die Wahrscheinlichkeit eines Ölfilmabrisses im Übergangsbereich, da ein diskontinuierlicher Übergang bei einer Verkippung oder Verbiegung der Welle ähnlich wie der Rand einer geradlinigen, nicht balligen Gleitfläche wirkt.

Vorzugsweise ist der Krümmungsradius in den Randbereichen, in axialer Richtung gesehen, konstant. Mit anderen Worten, neben dem ebenen Bereich, für den kein Krümmungsradius definiert ist, weist die Lagerschale in axialer Richtung in den Randbereichen eine Krümmung mit konstantem Krümmungsradius auf. Auf diese Weise werden der Aufbau der Lagerschale und die Herstellung derselben vereinfacht. Ein konstanter Krümmungsradius bewirkt, im Gegensatz zu einer Abschrägung, eine wachsende Dickenabnahme der Lagerschale zum Rand hin. Auf diese Weise werden verschiedene Kippwinkel und/oder Durchbiegungsgrade der Welle kompensiert.

Vorzugsweise ändert sich der Krümmungsradius in den Randbereichen, in axialer Richtung gesehen. Durch einen veränderlichen Krümmungsradius lässt sich der Betrag der Dickenänderung, d. h. die Stärke der Zunahme des Abfalls, im Randbereich noch besser an eine im Betrieb auftretende, individuelle Verteilung verschiedener Kippwinkel oder Durchbiegungsgrade der Welle anpassen. Vorzugsweise ist die Änderung stetig.

Vorzugsweise ist die Gleitfläche der Lagerschale in axialer Richtung über die gesamte Breite gekrümmt, wobei die Krümmung durchgängig konvex ist. Durch eine durchgängige konvexe Krümmung wird die Wahrscheinlichkeit eines Ölfilmabrisses aufgrund Verkippung oder Durchbiegung der Welle minimiert. Darüber hinaus wird eine ausreichende Führungsgenauigkeit der Lagerschale dadurch gewährleistet, dass die Krümmung in Umfangsrichtung abnimmt und ggf. zu den Teilflächen hin vollständig ausläuft.

Vorzugsweise ist der Krümmungsradius über die gesamte Breite in axialer Richtung konstant, um bei einem einfachen Herstellungsverfahren eine gute Anpassung an verschiedene Anstellwinkel der Welle relativ zur axialen Richtung der Lagerschale zu gewährleisten.

Vorzugsweise ändert sich der Krümmungsradius von innen nach außen in axialer Richtung, um einer individuellen Verteilung verschiedener Kippwinkel oder Durchbiegungsgrade der Welle im Betrieb gerecht zu werden. Vorzugsweise ist die Änderung stetig.

Vorzugsweise beträgt die Dickenabnahme der Gleitfläche im Bereich des Scheitels (in axialer Richtung gesehen) 2 µm bis 8 µm. Diese Auswahl hat sich insbesondere bei Pleuellagern in Verbrennungsmotoren als ausgezeichneter Kompromiss zwischen Kippwinkelkompensation und Führungsstabilität erwiesen.

Das Werkzeug zur Herstellung einer Lagerschale, wie sie oben beschrieben ist, weist eine zylindrische Bohrspindel auf, die von einem Drehantrieb angetrieben wird. Die Bohrspindel dreht sich um eine Drehachse und weist zumindest eine erste Schneidpatrone auf, die an der Bohrspindel am Außenumfang angebracht bzw. eingesetzt ist. Die Spindel kann, wie es oben beschrieben ist, eine weitere Schneidpatrone zur Ausbildung von Freilegungsbereichen oder zum Einbringen einer Mikrostruktur aufweisen. Ein Schneidbereich der Schneidpatrone gerät bei der Bearbeitung des Lagerschalenrohlings mit der Gleitschicht des Rohlings in Kontakt und schneidet die Lagerschale bei Drehung der Bohrspindel auf eine gewisse Wanddicke (kontinuierlich oder diskontinuierlich), wodurch auch gleichzeitig die eigentliche Gleitfläche erzeugt wird.

Zur Herstellung einer erfindungsgemäßen Gleitlagerschale wird ein Rohling zunächst in eine Bohraufnahme eingespannt. Die Fertigung der Gleitfläche geschieht mittels einer Überlagerung zweier Relativbewegungen zwischen Bohrspindel und Lagerschalenrohling. Zusätzlich zur Drehung der Bohrspindel findet dabei eine erste Relativbewegung, eine geradlinige Relativbewegung des Lagerschalenrohlings und der Bohrspindel entlang der axialen Richtung der zu fertigenden Lagerschale zum Ausspindeln der Gleitfläche der Lagerschale, und eine damit überlagerte, dazu senkrechte zweite Relativbewegung des Lagerschalenrohlings und der Bohrspindel statt, so dass eine Lagerschale mit balliger Gleitfläche hergestellt wird.

Die beiden Relativbewegungen, d. h. die axiale Relativbewegung und die dazu senkrechte Relativbewegung können mittels einer feststehenden bzw. stationären Bohraufnahme oder einer feststehenden bzw. stationären rotierenden Bohrspindel erzeugt werden. Auch eine Vermischung derjenigen Art ist denkbar, bei der die eingesetzte Bohrspindel, zusätzlich zu ihrer Rotationsbewegung, eine der Vorschubbewegung der Bohraufnahme gleichzeitig überlagerte Vertikalbewegung ausführt. Umgekehrt kann die eingesetzte Bohrspindel, zusätzlich zu ihrer Rotationsbewegung, eine der Vertikalbewegung der Bohraufnahme gleichzeitig überlagerte Vorschubbewegung ausführen.

Auf eine Radialbewegung der gesamten Bohrspindel zur Profilierung der Gleitfläche kann sogar verzichtet werden, wenn die erste Schneidpatrone in ihrer axialen Richtung mittels eines Verstellmittels während des Betriebs des Werkzeugs verstellbar ist. Die Verstellrichtung unterscheidet sich von der Richtung der Drehachse, so dass die Verstellrichtung eine nicht verschwindende Komponente in der Richtung senkrecht zur Drehachse aufweist. Auf diese Weise lässt sich während der Ausbohrung der Lagerschale gezielt die konvexe Krümmung einbringen.

Bei allen genannten Herstellungsverfahren ist ein Ausspindeln der Gleitfläche mit gleichzeitiger Profilierung und ggf. Einbringung von Freilegungsbereichen in einem einzigen Arbeitsgang möglich.

### Kurze Beschreibung der Zeichnungen

- Figur 1: zeigt eine Lagerschale mit einer geradlinig gearbeiteten, profilfreien Gleitfläche.
- Figur 2: zeigt den Querschnitt durch eine Lagerschale gemäß der Figur 1.
- Figur 3: zeigt den Querschnitt durch eine Lagerschale mit einem an den Randbereichen abgerundeten Gleitflächenprofil.
- Figur 4: zeigt schematisch eine zum Lager verkippte Welle, wobei das Lager eine geradlinig gearbeitete, profilfreien Gleitfläche aufweist.
- Figur 5: zeigt schematisch eine zum Lager verkippte Welle, wobei das Lager ein an den Randbereichen abgerundetes Gleitflächenprofil aufweist.
- Figur 6: zeigt eine Lagerschale mit einem an den Randbereichen konvex abgerundeten Gleitflächenprofil, wobei die konvexe Krümmung zu den Teilflächen hin ausläuft.
- Figur 7A: zeigt eine Lagerschale mit einem Gleitflächenprofil mit konstantem Krümmungsradius.
- Figur 7B: zeigt eine Lagerschale mit einem Gleitflächenprofil mit sich stetig änderndem Krümmungsradius.
- Figur 7C: zeigt eine Lagerschale mit einem Gleitflächenprofil mit konstantem Krümmungsradius und ebenem Bereich.
- Figur 7D: zeigt eine Lagerschale mit einem Gleitflächenprofil mit sich stetig änderndem Krümmungsradius und ebenem Bereich.

### Wege zur Ausführung der Erfindung

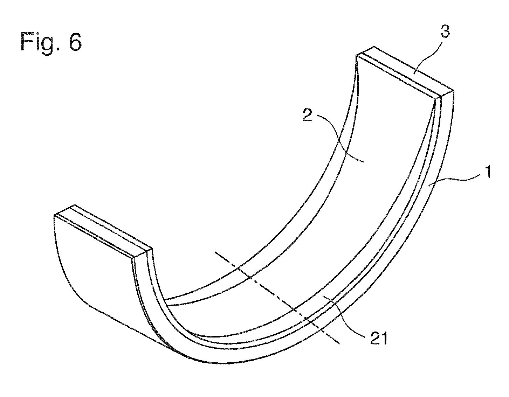

Figur 6 zeigt eine Lagerschale 1 mit einem an den Randbereichen (in axialer Richtung der Lagerschale 1 gesehen) konvex abgerundeten Gleitflächenprofil 21, wobei die konvexe Krümmung zu den Teilflächen 3 hin ausläuft.

Durch die Krümmung 21 an den Randbereichen werden die Auswirkungen einer Durchbiegung oder Verkantung einer in der Lagerschale 1 unter Last laufenden Welle hinsichtlich des Verschleißes und der Laufeigenschaften abgemildert, da die Wahrscheinlichkeit eines Ölfilmabrisses am Rand der Lagerschale 1 verringert wird. Es sei darauf hingewiesen, dass die Krümmung in den Figuren 3, 5, 6 und 7A bis 7D aus Gründen der Darstellung stark überzeichnet ist.

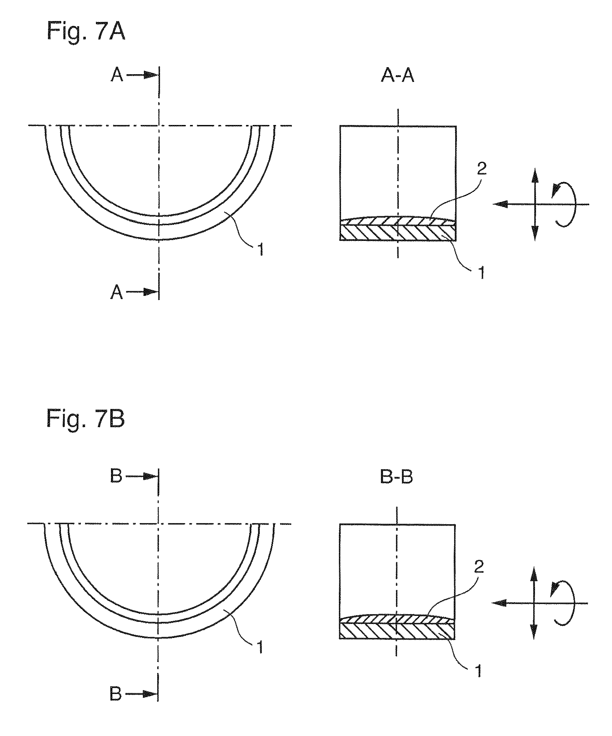

Gemäß Figur 7A ist das Profil der Gleitfläche 2 im Scheitel der Gleitlagerschale 1 in axialer Richtung über ihre gesamte Länge mit einem gleichbleibenden Krümmungsradius konvex gekrümmt. Dieses Profil ist in Umfangsrichtung der Gleitlagerschale 1 zu beiden Teilflächen 3 hin kontinuierlich abnehmend und auslaufend.

In einer weiteren Ausführungsform ist das Profil gemäß Figur 7B im Scheitel der Gleitlagerschale 1 in axialer Richtung über die gesamte Länge mit einem sich stetig ändernden Krümmungsradius konvex gekrümmt. Dieses Profil ist in Umfangsrichtung der Gleitlagerschale 1 zu beiden Teilflächen 3 hin kontinuierlich abnehmend und auslaufend.

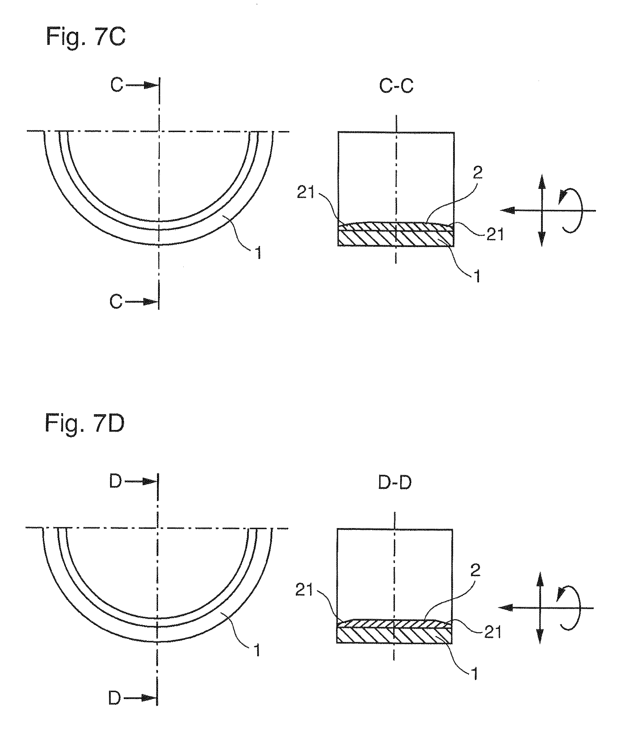

In einer weiteren Ausführungsform ist das Profil der Gleitfläche 2 einer Gleitlagerschale 1 gemäß Figur 7C im Scheitel in axialer Richtung in den Randbereichen 21 mit einem gleichbleibenden Krümmungsradius konvex gekrümmt. Zwischen den beiden konvex gekrümmten Randbereichen 21 ist die Gleitfläche 2 eben. Der Übergang vom gekrümmten zum ebenen Bereich der Gleitfläche 2 erfolgt kontinuierlich. Auch dieses Profil ist in Umfangsrichtung der Gleitlagerschale 1 zu beiden Teilflächen 3 hin kontinuierlich abnehmend und auslaufend.

In einer weiteren Ausführungsform ist das Profil der Gleitfläche 2 gemäß Figur 7D im Scheitel der Gleitlagerschale 1 in axialer Richtung in den Randbereichen 21 mit einem sich stetig änderndem Krümmungsradius konvex gekrümmt. Zwischen den beiden konvex gekrümmten Randbereichen 21 ist die Gleitfläche 2 eben. Der Übergang vom gekrümmten zum ebenen Bereich der Gleitfläche 2 erfolgt kontinuierlich. Auch dieses Profil ist in Umfangsrichtung der Gleitlagerschale 1 zu beiden Teilflächen 3 hin kontinuierlich abnehmend und auslaufend.

Zur Herstellung der Lagerschale wird eine Bohrspindel verwendet, die eine erste Schneidpatrone und ggf. eine zweite Schneidpatrone, zur Ausbildung von Freilegungsbereichen, aufweist.

Zur Herstellung der profilierten Gleitfläche 2 eines in einer Bohraufnahme eingespannten Lagerschalenrohlings führt die eingesetzten Bohrspindel zusätzlich zu ihrer Rotationsbewegung eine Vorschubbewegung und eine gleichzeitig auszuführende, dieser überlagerte Vertikalbewegung aus. Vorzugsweise wird der zu bearbeitende Gleitlagerschalenrohling dabei in einer stationären bzw. stillstehenden Bohraufnahme festgehalten.

Alternativ kann die Vorschubbewegung und die gleichzeitig auszuführende Vertikalbewegung auch von der Bohraufnahme ausgeführt werden. Die eingesetzte Bohrspindel führt in diesem Fall nur ihre Rotationsbewegung aus und ist darüber hinaus stationär.

Eine weitere Alternative ergibt sich, indem die eingesetzte Bohrspindel, zusätzlich zu ihrer Rotationsbewegung, eine der Vorschubbewegung der Bohraufnahme gleichzeitig überlagerte Vertikalbewegung ausführt.

Eine weitere Alternative ergibt sich, indem die eingesetzte Bohrspindel, zusätzlich zu ihrer Rotationsbewegung, eine der Vertikalbewegung der Bohraufnahme gleichzeitig überlagerte Vorschubbewegung ausführt.

Alternativ können die erste und/oder zweite Schneidpatrone an der Bohrspindel radial beweglich vorgesehen sein. Die Schneidpatronen können beispielsweise gegen Piezoelemente verspannt sein. Über eine entsprechende Ansteuerung des Piezoelements bzw. der Piezoelemente (im Falle mehrerer Schneidpatronen) dehnt sich dieses aus und ändert somit die Position der Schneidpatrone, und zwar hauptsächlich in radialer Richtung der Bohrspindel. Auf diese Weise kann die beschriebene Profilierung ohne vertikale Bewegung der gesamten Bohrspindel oder der Bohraufnahme, sondern lediglich durch Anheben und Absenken der Schneidpatrone(n) hergestellt werden.

## Patentansprüche

1. Gleitlagerschale (1), deren Gleitfläche (2) im Bereich des Scheitels der Gleitlagerschale (1) zumindest an den Randbereichen (21) in axialer Richtung konvex gekrümmt ist,
**dadurch gekennzeichnet, dass**
die Krümmung im Scheitel der Gleitlagerschale (1) am stärksten ausgeführt ist und in Umfangsrichtung der Gleitlagerschale (1) zu den beiden Teilflächen (3) hin kontinuierlich abnimmt.

2. Gleitlagerschale (1) nach Anspruch 1, **dadurch gekennzeichnet, dass** die Krümmung in Umfangsrichtung kontinuierlich bis auf Null ausläuft, so dass zumindest an den beiden Teilflächen (3) keine konvexe Profilierung vorgesehen ist.

3. Gleitlagerschale (1) nach Anspruch 1 oder 2, **dadurch gekennzeichnet, dass** die Gleitfläche (2) der Gleitlagerschale (1) an den Randbereichen (21), in axialer Richtung konvex gekrümmt und dazwischen eben ist, wobei der Übergang zwischen dem gekrümmten und dem ebenen Bereich kontinuierlich ist.

4. Gleitlagerschale (1) nach Anspruch 3, **dadurch gekennzeichnet, dass** der Krümmungsradius in den Randbereichen (21) in axialer Richtung konstant ist.

5. Gleitlagerschale (1) nach Anspruch 3, **dadurch gekennzeichnet, dass** sich der Krümmungsradius in den Randbereichen (21) in axialer Richtung ändert.

6. Gleitlagerschale (1) nach Anspruch 1 oder 2, **dadurch gekennzeichnet, dass** die Gleitfläche (2) der Gleitlagerschale (1) in axialer Richtung über die gesamte Breite gekrümmt ist, wobei die Krümmung durchgängig konvex ist.

7. Gleitlagerschale (1) nach Anspruch 6, **dadurch gekennzeichnet, dass** der Krümmungsradius über die gesamte Breite in axialer Richtung konstant ist.

8. Gleitlagerschale (1) nach Anspruch 6, **dadurch gekennzeichnet, dass** sich der Krümmungsradius von innen nach außen in axialer Richtung ändert.

9. Gleitlagerschale (1) nach einem der vorhergehenden Ansprüche, **dadurch gekennzeichnet, dass** die Dickenabnahme der Gleitfläche (2) zwischen 2 µm und 8 µm beträgt.

10. Verfahren zur Herstellung einer Gleitlagerschale (1) unter Verwendung einer rotierenden Bohrspindel, mit den folgenden Schritten:
a) Einspannen eines Lagerschalenrohlings in eine Bohraufnahme;
b) Überlagern einer relativen, geradlinigen Bewegung des Lagerschalenrohlings und der Bohrspindel entlang der axialen Richtung der zu fertigenden Gleitlagerschale (1) zum Ausspindeln der Gleitfläche (2) der Gleitlagerschale (1) mit einer dazu senkrechten, relativen Bewegung des Lagerschalenrohlings und der Bohrspindel, so dass eine Gleitlagerschale (1) mit balliger Gleitfläche (2) nach einem der vorhergehenden Ansprüche hergestellt wird.

11. Verfahren nach Anspruch 10, **dadurch gekennzeichnet, dass** die Bohraufnahme stationär ist und die beiden Relativbewegungen durch ein Verschieben der Bohrspindel erzeugt werden.

12. Verfahren nach Anspruch 10, **dadurch gekennzeichnet, dass** die Bohrspindel stationär ist und die beiden Relativbewegungen durch ein Verschieben der Bohraufnahme erzeug werden.

13. Verfahren nach Anspruch 10, **dadurch gekennzeichnet, dass** die Bohrspindel zumindest eine verstellbare Schneidpatrone aufweise, die sich während des Betriebs der Bohrspindel so radial verstellen lässt, dass eine Gleitlagerschale (1) mit balliger Gleitfläche (2) nach einem der vorhergehenden Ansprüche hergestellt wird.

## Claims

1. Plain bearing shell (1) of which the sliding surface (2) is convexly curved in the axial direction in the region of the apex of the plain bearing shell (1) at least in the edge regions (21), **characterised in that** the curvature is greatest at the apex of the plain bearing shell (1) and decreases continuously in the circumferential direction of the plain bearing shell (1) towards the two parting surfaces (3).

2. Plain bearing shell (1) according to claim 1, **characterised in that** the curvature tapers off continuously to zero in the circumferential direction, so that no convex profiling is provided at least at the two parting surfaces (3).

3. Plain bearing shell (1) according to claim 1 or 2, **characterised in that** the sliding surface (2) of the plain bearing shell (1) is convexly curved in the axial direction in the edge regions (21) and flat in between, the transition between the curved and flat regions being continuous.

4. Plain bearing shell (1) according to claim 3, **characterised in that** the radius of curvature is constant in the axial direction in the edge regions (21).

5. Plain bearing shell (1) according to claim 3, **characterised in that** the radius of curvature varies in the axial direction in the edge regions (21).

6. Plain bearing shell (1) according to claim 1 or 2, **characterised in that** the sliding surface (2) of the plain bearing shell (1) is curved across the whole width in the axial direction, the curvature being consistently convex.

7. Plain bearing shell (1) according to claim 6, **characterised in that** the radius of curvature is constant in the axial direction across the whole width.

8. Plain bearing shell (1) according to claim 6, **characterised in that** the radius of curvature varies in the axial direction from the inside to the outside.

9. Plain bearing shell (1) according to any of the preceding claims, **characterised in that** the decrease in thickness of the sliding surface (2) is between 2 µm and 8 µm.

10. Method for the manufacture of a plain bearing shell (1) using a rotating drilling spindle, having the following steps:
a) clamping a bearing shell blank in a drilling holder;
b) superimposing, on a relative, rectilinear movement of the bearing shell blank and the drilling spindle along the axial direction of the plain bearing shell (1) to be manufactured for finishing the sliding surface (2) of the plain bearing shell (1), a relative movement of the bearing shell blank and the drilling spindle which is perpendicular thereto, so that a plain bearing shell (1) with a spherical sliding surface (2) is made according to any of the preceding claims.

11. Method according to claim 10, **characterised in that** the drilling holder is stationary and the two relative movements are produced by displacement of the drilling spindle.

12. Method according to claim 10, **characterised in that** the drilling spindle is stationary and the two relative movements are produced by displacement of the drilling holder.

13. Method according to claim 10, **characterised in that** the drilling spindle has at least one displaceable cutting cartridge which can be displaced radially during operation of the drilling spindle in such a way that a plain bearing shell (1) with a spherical sliding surface (2) is made according to any of the preceding claims.

## Revendications

1. Coquille de coussinet lisse (1), dont la surface de glissement (2), dans la zone du sommet de la coquille de coussinet lisse (1), au moins dans les zones de bordure (21), comporte une courbure convexe dans le sens axial,
**caractérisée en ce que**
la courbure est la plus forte dans le sommet de la coquille de coussinet lisse (1) et diminue en continu vers les deux surfaces partielles (3) dans le sens circonférentiel de la coquille de coussinet lisse (1).

2. Coquille de coussinet lisse (1) selon la revendication 1, **caractérisée en ce que** la courbure fuit en continu jusqu'à zéro dans le sens circonférentiel, de telle sorte qu'aucun profilage convexe n'est prévu au moins dans les deux surfaces partielles (3).

3. Coquille de coussinet lisse (1) selon la revendication 1 ou 2, **caractérisée en ce que** la surface de glissement (2) de la coquille de coussinet lisse (1), au niveau des zones de bordure (21), présente une courbure convexe dans le sens axial et est plane entre lesdites zones, la transition entre la zone courbe et la zone plane étant continue.

4. Coquille de coussinet lisse (1) selon la revendication 3, **caractérisée en ce que** le rayon de courbure dans les zones de bordure (21) est constant dans le sens axial.

5. Coquille de coussinet lisse (1) selon la revendication 3, **caractérisée en ce que** le rayon de courbure dans les zones de bordure (21) varie dans le sens axial.

6. Coquille de coussinet lisse (1) selon la revendication 1 ou 2, **caractérisée en ce que** la surface de glissement (2) de la coquille de coussinet lisse (1) est courbe dans le sens axial sur toute la largeur, la courbure étant convexe de manière constante.

7. Coquille de coussinet lisse (1) selon la revendication 6, **caractérisée en ce que** le rayon de courbure est constant dans le sens axial sur toute la largeur.

8. Coquille de coussinet lisse (1) selon la revendication 6, **caractérisée en ce que** le rayon de courbure varie dans le sens axial de l'intérieur vers l'extérieur.

9. Coquille de coussinet lisse (1) selon l'une quelconque des revendications précédentes, **caractérisée en ce que** la diminution de l'épaisseur de la surface de glissement (2) se situe entre 2 µm et 8 µm.

10. Procédé permettant la réalisation d'une coquille de coussinet lisse (1) moyennant l'utilisation d'une broche de perçage rotative, comportant les étapes suivantes :
a) serrage d'une ébauche de coquille de coussinet dans un logement de perçage ;
b) superposition d'un mouvement relatif rectiligne de ladite ébauche et de la broche de perçage le long du sens axial de la coquille de coussinet lisse (1) à réaliser, afin de forer la surface de glissement (2) de la coquille de coussinet lisse (1) avec un mouvement relatif, perpendiculaire à celle-ci, de l'ébauche de coquille de coussinet et de la broche de perçage, de manière à obtenir une coquille de coussinet lisse (1) à surface de glissement (2) bombée selon l'une des revendications précédentes.

11. Procédé selon la revendication 10, **caractérisé en ce que** le logement de perçage est stationnaire et les deux mouvements relatifs sont générés par un déplacement de la broche de perçage.

12. Procédé selon la revendication 10, **caractérisé en ce que** la broche de perçage est stationnaire et les deux mouvements relatifs sont générés par un déplacement du logement de perçage.

13. Procédé selon la revendication 10, **caractérisé en ce que** la broche de perçage comporte au moins une cartouche de coupe réglable qui, en cours de fonctionnement de la broche de perçage, se laisse déplacer radialement de manière à réaliser une coquille de coussinet lisse (1) avec une surface de glissement (2) bombée selon l'une des revendications précédentes.
